# EUROPEAN PATENT APPLICATION

(11) **EP 4 682 743 A1**
(43) Date of publication of application: **21.01.2026**
(21) Application number: 23927050.7
(22) Date of filing: 11.09.2023
(51) Int. Cl.: G06F 16/901

(54) **LINKED LIST DATA STRUCTURE AND DATA PROCESSING METHOD THEREFOR, STORAGE MEDIUM, AND ELECTRONIC DEVICE**

(30) Priority: 13.03.2023 CN 202310233128
(71) Applicant: Beijing Jaguar Microsystems Co., Ltd., Beijing 100000 (CN)
(72) Inventor: SIU, Kai Yeung Sunny, Shenzhen, Guangdong 518057 (CN); WANG, Jiandong, Shenzhen, Guangdong 518057 (CN); MA, Qiang, Shenzhen, Guangdong 518057 (CN); SHEN, Guolin, Shenzhen, Guangdong 518057 (CN); WEN, Bo, Shenzhen, Guangdong 518057 (CN)
(74) Representative: HGF
(86) International application number: PCT/CN2023/117916
(87) International publication number: WO 2024/187704

(57) **Abstract**

The present application relates to a linked list data structure and a data processing method therefor, a storage medium, and an electronic device. The linked list data structure comprises an RAM, an idle address management unit, and a multi-head linked list; the multi-head linked list comprises a control unit, a write operation sub-link indication unit, a read operation sub-link indication unit, and n sub-links; each sub-link comprises a sub-link length unit, a write pointer unit, and a read pointer unit. On the basis of the linked list data structure of the present application, a read command is initiated in each clock cycle by means of an n-head linked list, and data can be outputted in each clock cycle.

## Description

### CROSS REFERENCE TO RELATED APPLICATION

The present application claims priority to Chinese Patent Application No. 202310233128.1, filed with the China National Intellectual Property Administration on March 13, 2023 and entitled "Linked List Data Structure and Data Processing Method therefor, Storage Medium, and Electronic Device", which is incorporated herein by reference in its entirety.

### TECHNICAL FIELD

The present application relates to the field of linked list data reading and writing technology, particularly to a linked list data structure and a data processing method thereof, a computer-readable storage medium, and an electronic device.

### BACKGROUND

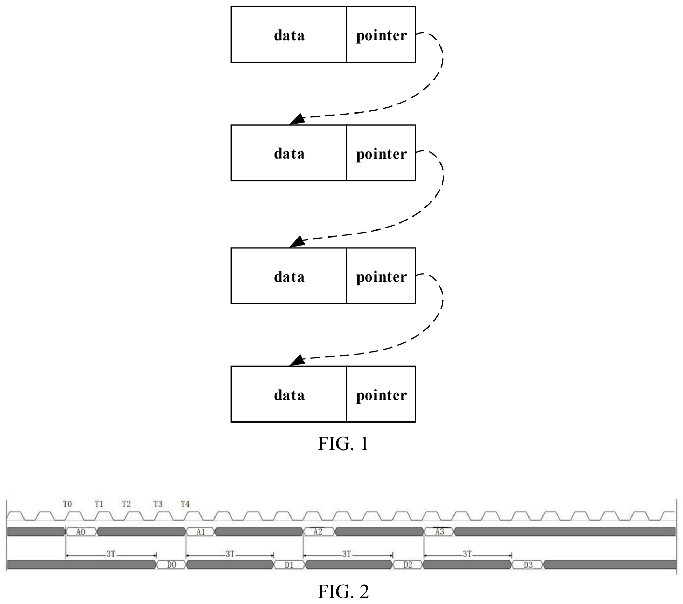

A linked list data structure is often used in digital circuit design, as shown in FIG. 1. In the linked list data structure, each piece of data is followed by a pointer that points to the address of the next piece of data. Pieces of data and contents of pointers are generally stored in a Random Access Memory (RAM). The contents of the pointers are addresses of these pieces of data in the RAM. When a piece of data is read from the RAM, the piece of data and the content of the corresponding pointer are read together, so that an address of a next piece of data and a content of a corresponding pointer in the RAM can be determined according to the content of the pointer corresponding to the piece of data. Accordingly, the RAM can be accessed according to the address, and the next piece of data and the content of the corresponding pointer can be read.

Since the RAM usually has a read delay, in the data reading mode of the existing linked list data structure, it usually requires 3 to 4 clock cycles from initiating a read request to obtaining a read result. Accordingly, after a piece of data is read, it may take 3 to 4 clock cycles to know the address of the next piece of data and initiate the reading of the next piece of data, which results in low data reading efficiency of the linked list data structure. The data reading mode of the existing linked list data structure is specifically shown in FIG. 2. In FIG. 2, after a command for reading the address A0 is initiated at time T0, data D0 is obtained at time T3 after three clock cycles. In the next clock cycle T4, the address Al of the next node is obtained according to the data D0, a read command is initiated, and then it still takes another three clock cycles to obtain the next piece of data D1. In FIG. 2, one piece of data is read every four clock cycles on average. Such performance is not enough for many designs with high bandwidth requirements. In these designs, it usually requires reading one piece of data in one clock cycle. The system clock of 1GHz and the data width of 512bits are taken as an example. If one piece of data is read every four clock cycles, the system bandwidth is only 128Gbps; if one piece of data is read every one clock cycle, the system bandwidth may reach 512Gbps.

### SUMMARY

The purpose of the present invention is to provide a linked list data structure and a data processing method thereof, a computer-readable storage medium, and an electronic device.

In order to achieve the above purpose, according to the first aspect of the present invention, a linked list data structure is provided, including: a Random Access Memory (RAM), a free address management unit, and a multi-head linked list; the multi-head linked list comprises a control unit, a write operation sub-link indicator unit, a read operation sub-link indicator unit, and n sub-links, where n is a positive integer greater than or equal to 2; the n sub-links each comprise a control unit, a sub-link length unit, a write pointer unit, and a read pointer unit; the RAM comprises a plurality of data units, and a plurality of pointer storage units corresponding to the plurality of data units in a one-to-one correspondence, wherein one data unit and one corresponding pointer storage unit share one address in the RAM;
the plurality of data units are configured to store data;
the plurality of pointer storage units are configured to store addresses, in which one data unit is configured to store the i-th piece of data of one sub-link, one pointer storage unit corresponding to the one data unit is configured to store an address of a data unit where the (*i*+1)-th piece of data of the one sub-link is located;
the free address management unit is configured to manage free addresses in the RAM, and output one free address to the control unit when receiving a free address reading request from the control unit;
the write operation sub-link indicator unit is configured to store a sub-link number of a write target sub-link, wherein the write target sub-link is a sub-link into which to-be-written data is to be written;
the read operation sub-link indicator unit is configured to store a sub-link number of a read target sub-link, wherein the read target sub-link is a sub-link where the to-be-read data is located;
the sub-link length unit is configured to store sub-link length information, wherein the sub-link length information indicates the number of pieces of data currently stored in a sub-link;
the write pointer unit is configured to store an address of a piece of data in the RAM which is currently written into the multi-head linked list;
the read pointer unit is configured to store an address of a next piece of data in the RAM which is to be read from the multi-head linked list; and
the control unit is configured to: determine a write target sub-link according to the sub-link number stored in the write operation sub-link indicator unit when receiving a data writing request; perform a data writing operation according to the free address, sub-link length information stored in a sub-link length unit of the write target sub-link, and an address stored in the write pointer unit; determine a read target sub-link according to the sub-link number stored in the read operation sub-link indicator unit when receiving a data reading request; and perform a data reading operation according to an address stored in a read pointer unit of the read target sub-link.

Based on the linked list data structure provided in the first aspect of the present invention, when n pieces of consecutive data are stored, one piece of data is written into one sub-link in one clock cycle, and the *n* pieces of data are respectively written into the *n* sub-links of the n-head linked list in sequence in *n* consecutive clock cycles to complete the writing of the *n* pieces of data. Accordingly, when the *n* pieces of consecutive data are read subsequently, one piece of data is read out from one sub-link in one clock cycle, and the data reading operation is performed respectively on the *n* sub-links in sequence in *n* consecutive clock cycles to obtain the *n* pieces of data. As a result, the read command is initiated in each clock cycle through the n-head linked list, and data can be output in each clock cycle.

According to the second aspect of the present invention, a data processing method applied to the above-mentioned linked list data structure is provided, the method includes: performing a data writing operation when the control unit receives a data writing request;
performing the data writing operation includes:
acquiring to-be-written data according to the data writing request;
reading a sub-link number stored in the write operation sub-link indicator unit, determining a write target sub-link according to the sub-link number stored in the write operation sub-link indicator unit, and acquiring sub-link length information stored in a sub-link length unit of the write target sub-link, and an address stored in a write pointer unit of the write target sub-link;
transmitting a free address reading request to the free address management unit, and receiving a free address returned by the free address management unit;
writing the to-be-written data into a data unit in the RAM corresponding to the free address;
determining whether to write the free address into a pointer storage unit in the RAM corresponding to the address stored in the write pointer unit of the write target sub-link according to the sub-link length information stored in the sub-link length unit of the write target sub-link;
updating the sub-link number stored in the write operation sub-link indicator unit to a sub-link number of a next write target sub-link;
updating the address stored in the write pointer unit of the write target sub-link to the free address;
updating the sub-link length information stored in the sub-link length unit of the write target sub-link according to the number of pieces of data currently stored in the write target sub-link.

The data processing method provided in the second aspect of the present invention is implemented based on the linked list data structure provided in the first aspect of the present invention. When n pieces of consecutive data are stored, one piece of data is written into one sub-link in one clock cycle, and the *n* pieces of data are respectively written into the *n* sub-links of the n-head linked list in sequence in *n* consecutive clock cycles to complete the writing of the *n* pieces of data. Accordingly, when the *n* pieces of consecutive data are read subsequently, one piece of data is read out from one sub-link in one clock cycle, and the data reading operation is performed respectively on the *n* sub-links in sequence in *n* consecutive clock cycles to obtain the *n* pieces of data. As a result, the read command is initiated in each clock cycle through the n-head linked list, and data can be output in each clock cycle.

According to the third aspect of the present invention, a computer-readable storage medium is provided, on which a computer program is stored. The computer program, when executed by a processor, causes the processor to implement the data processing method according to the second aspect of the present invention.

According to the fourth aspect of the present invention, an electronic device is provided, including a processor and a memory storing a computer program executable by the processor. The processor, when executing the computer program, implements the data processing method according to the second aspect of the present invention.

According to the fifth aspect of the present invention, a chip is provided, including a processor and a memory.

The processor is configured to invoke and execute a computer program from the memory, to allow a device equipped with the chip to implement the data processing method according to the second aspect of the present invention.

According to the sixth aspect of the present invention, a computer program product is provided, including involved program instructions. The involved program instructions, when executed by a processor, cause the processor to implement the data processing method according to the second aspect of the present invention.

According to the seventh aspect of the present invention, a computer program is provided, including program instructions. When executed on an electronic device, the program instructions cause the computer device to implement the data processing method according to the second aspect of the present invention.

According to the eighth aspect of the present invention, a device is provided, including at least one processor. When involved program instructions are executed by the at least one processor, the device implements the data processing method according to the second aspect of the present invention.

Other features and advantages of the present invention will be set forth in the following description.

### BRIEF DESCRIPTION OF THE DRAWINGS

In order to more clearly illustrate the technical solution in the embodiments of the present invention or the related technologies, accompanying drawings required for describing the embodiments or the related technologies will be briefly introduced below. Obviously, the drawings described below are only some embodiments of the present invention, those skilled in the art may obtain other drawings according to these drawings without any creative effort.
FIG. 1 is a schematic diagram illustrating a linked list data structure in the related art.
FIG. 2 is a schematic diagram of a data reading process of a linked list data structure in the related art.
FIG. 3 is a schematic diagram of a linked list data structure according to an embodiment of the present invention.
FIG. 4 is a schematic diagram of reading and writing processes of a linked list data structure according to an embodiment of the present invention.
FIG. 5 is a flow chart of executing a data writing operation according to an embodiment of the present invention.
FIG. 6 is a schematic diagram of a data writing process of a multi-head linked list according to an embodiment of the present invention.
FIG. 7 is a flow chart of executing a data reading operation according to an embodiment of the present invention.

### DETAILED DESCRIPTION OF THE EMBODIMENTS

The detailed description of the drawings is intended as a description of currently optional embodiments of the present invention and is not intended to represent the only forms in which the present invention can be implemented. It should be appreciated that the same or equivalent functions may be implemented by different embodiments included within the spirit and scope of the present application.

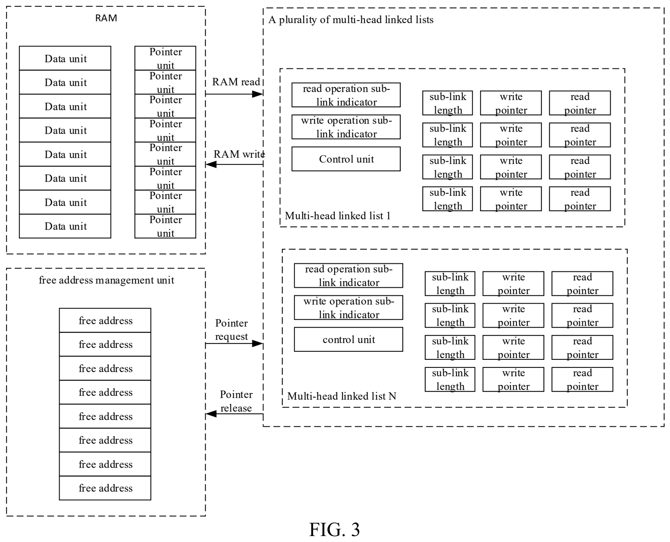

In an embodiment of the present invention, a linked list data structure is provided, as shown in FIG. 3. The linked list data structure includes a RAM, a free address management unit, and a multi-head linked list. The multi-head linked list includes a control unit, a write operation sub-link indicator unit, a read operation sub-link indicator unit, and *n* sub-links, where *n* is a positive integer greater than or equal to 2. The n sub-links each include a sub-link length unit, a write pointer unit, and a read pointer unit. The RAM includes a plurality of data units and a plurality of pointer storage units corresponding to the plurality of data units in a one-to-one correspondence. Any data unit and one corresponding pointer storage unit share one address in the RAM.

The data units are configured to store data. Specifically, one data unit stores one piece of data.

The pointer storage units are configured to store addresses. For example, one pointer storage unit stores one address. If one data unit is configured to store the i-th piece of data of one sub-link, a pointer storage unit corresponding to the one data unit is configured to store an address of a data unit where the (*i*+1)-th piece of data of the one sub-link is located, that is, the address stored in the pointer storage unit is configured to represent a relationship between two pieces of data.

The free address management unit is configured to manage free addresses in the RAM, and output a free address to the control unit when receiving a free address reading request from the control unit.

The write operation sub-link indicator unit is configured to store a sub-link number of a write target sub-link. The write target sub-link is a sub-link into which to-be-written data is to be written. Specifically, the write operation sub-link indicator unit provides a write target sub-link indication, and the control unit learns which sub-link the to-be-written data needs to be written into according to the indication of the write operation sub-link indicator unit. For the multi-head linked list, only one piece of data is written into one sub-link in each clock cycle. In the next clock cycle, if data needs to be written, the data is written into the next sub-link in the next clock cycle.

The read operation sub-link indicator unit is configured to store a sub-link number of a read target sub-link. The read target sub-link is a sub-link where to-be-read data is located. Specifically, the read operation sub-link indicator unit provides a read target sub-link indication, and the control unit learns in which sub-link the to-be-read data is stored according to the indication of the read operation sub-link indicator unit. For the multi-head linked list, only one piece of data is read from one sub-link in each clock cycle. In the next clock cycle, if data needs to be read, the data is read from the next sub-link in the next clock cycle, and a reading sequence of the data is exactly the same as a writing sequence of the data.

The sub-link length unit is configured to store sub-link length information. The sub-link length information includes the number of pieces of data currently stored in the sub-link.

The write pointer unit is configured to store an address of a piece of data in the RAM which is currently written into the multi-head linked list. Specifically, the address stored in the write pointer unit is updated after the data is written.

The read pointer unit is configured to store an address of a next piece of data in the RAM which is to be read from the multi-head linked list. Specifically, the address stored in the read pointer unit is updated after the data is read.

The control unit is configured to: determine a write target sub-link according to the sub-link number stored in the write operation sub-link indicator unit when receiving a data writing request; perform a data writing operation according to the free address, sub-link length information stored in a sub-link length unit of the write target sub-link, and an address stored in the write pointer unit; determine a read target sub-link according to the sub-link numbers stored in the read operation sub-link indicator unit when receiving a data reading request; and perform a data reading operation according to an address stored in a read pointer unit of the read target sub-link.

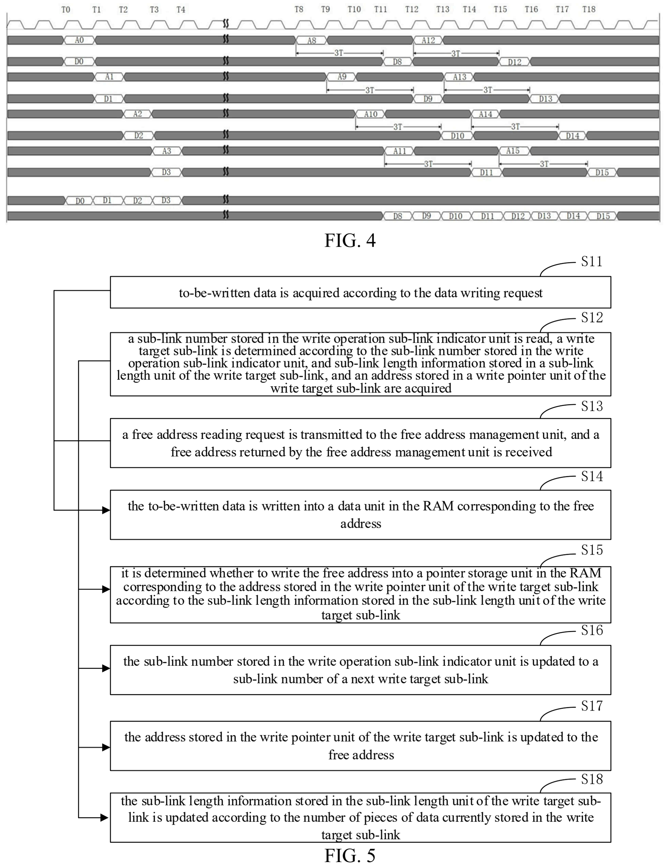

It should be noted that the linked list data structure in the embodiment may include one or more multi-head linked lists, and the structures and working principles of the multi-head linked lists are the same. Therefore, one multi-head linked list is taken as an example for illustration in the embodiment, and the number n of sub-links in each multi-head linked list is determined by time consumed in reading the linked list data. For example, in a reading process of the multi-head linked list shown in FIG. 4, the value of *n* is 4, because when a data reading request is initiated in the T8 clock cycle, data in the first sub-link corresponding to the address A8 is read, and the data corresponding to the address A8 is returned in the T11 clock cycle, that is, the time consumed in reading the data is equal to 4 clock cycles. Accordingly, the number n of sub-links in the multi-head linked list is set to 4 to implement the data reading in each clock cycle. Generally speaking, it takes 3 to 4 clock cycles to read one piece of data, and n may be set to 3 or 4, which specifically depends on the time consumed in reading the data.

Please continue to refer to FIG. 4, in the embodiment, when data writing is performed, the data is written to each sub-link in sequence, that is, data DO is written to the first sub-link with the address A0 in the clock cycle T0, data D1 is written to the second sub-link with the address Al in the clock cycle T1, data D2 is written to the third sub-link with the address A2 in the clock cycle T2, and data D3 is written to the second sub-link with the address A3 in the clock cycle T3.

When data reading is performed, the data is read from each sub-link in sequence, that is, data is read from the first sub-link corresponding to the address A8 in the clock cycle T8, data is read from the second sub-link corresponding to the address A9 in the clock cycle T9, data is read from the third sub-link corresponding to the address A10 in the clock cycle T10, data is read from the fourth sub-link corresponding to the address A11 in the clock cycle T11. In addition, data D8 corresponding to the address A8 is also returned in the clock cycle T11, and data corresponding to the address A12 can be read from the first sub-link again in the clock cycle T12.

Based on the above content, it can be seen that in the embodiment, after the replication of the sub-links, a multi-head linked list can initiate a read command in each clock cycle and output one piece of data in each clock cycle, that is, in FIG. 4, for eight clock cycles T11-T18, data is output in each clock cycle, thereby improving the data reading efficiency of the linked list data structure and solving the technical problem of low data reading efficiency of the existing linked list data structure.

Optionally, in the linked list data structure of the embodiment, the free address management unit is a First Input First Output (FIFO) device. When an address in the RAM is free, the free address is written into the FIFO device.

Specifically, the FIFO device follows the first input first output principle, and the free address written into the FIFO device first may be output first, that is, in one clock cycle, the free address management unit receives a free address reading request from the control unit and outputs a free address in the RAM for writing data. Assuming that a RAM depth for storing the linked list data is equal to 1024, 0, 1, 2, ..., 1023 are sequentially written into the free address management unit when the linked list is initialized, which indicates that in an initial state, these addresses in the RAM are free and can be allocated for use.

Optionally, in the linked list data structure of the embodiment, the write operation sub-link indicator unit, the read operation sub-link indicator unit, and the sub-link length unit are all registers.

Specifically, the register functions to store binary codes, which are formed by combining triggers with storage functions. One trigger can store 1-bit binary code, so that a register storing n-bit binary code needs to be formed by n triggers. For example, for a multi-head linked list including 4 sub-links, registers of the write operation sub-link indicator unit and the read operation sub-link indicator unit thereof need to represent four binary codes from 0 to 3, namely 00, 01, 10, and 11.

Based on the linked list data structure in the above embodiment, in another embodiment of the present invention, a data processing method for a linked list data structure is provided. The method includes: when the control unit receives a data writing request, a data writing operation is performed.

As shown in FIG. 5, the step of performing the data writing operation includes the following steps.
Step S11: To-be-written data is acquired according to the data writing request.
Step S12: A sub-link number stored in the write operation sub-link indicator unit is read, a write target sub-link is determined according to the sub-link number stored in the write operation sub-link indicator unit, and sub-link length information stored in a sub-link length unit of the write target sub-link, and an address stored in a write pointer unit of the write target sub-link are acquired.
Step S13: A free address reading request is transmitted to the free address management unit, and a free address returned by the free address management unit is received.
Step S14: The to-be-written data is written into a data unit in the RAM corresponding to the free address.
Step S15: It is determined whether to write the free address into a pointer storage unit in the RAM corresponding to the address stored in the write pointer unit of the write target sub-link according to the sub-link length information stored in the sub-link length unit of the write target sub-link.
Step S16: The sub-link number stored in the write operation sub-link indicator unit is updated to a sub-link number of a next write target sub-link.
Step S17: The address stored in the write pointer unit of the write target sub-link is updated to the free address.
Step S18: The sub-link length information stored in the sub-link length unit of the write target sub-link is updated according to the number of pieces of data currently stored in the write target sub-link.

Specifically, the sub-link length information represents the number of pieces of data currently stored in the sub-link, that is, the sub-link length information is represented as 0 when no data is written. After the first piece of data is written, the sub-link length information is updated to 1. After each data writing operation, the sub-link length information is updated and incremented by 1.

Optionally, in the data processing method of the embodiment, the step S15 includes:
It is determined whether the to-be-written data is the first piece of data written to the write target sub-link according to the sub-link length information stored in the sub-link length unit of the write target sub-link; if the to-be-written data is the first piece of data written to the write target sub-link, it is determined that the pointer storage unit in the RAM corresponding to the address stored in the write pointer unit of the write target sub-link is empty; if the to-be-written data is not the first piece of data written to the write target sub-link, the free address is written into the pointer storage unit in the RAM corresponding to the address stored in the write pointer unit of the write target sub-link.

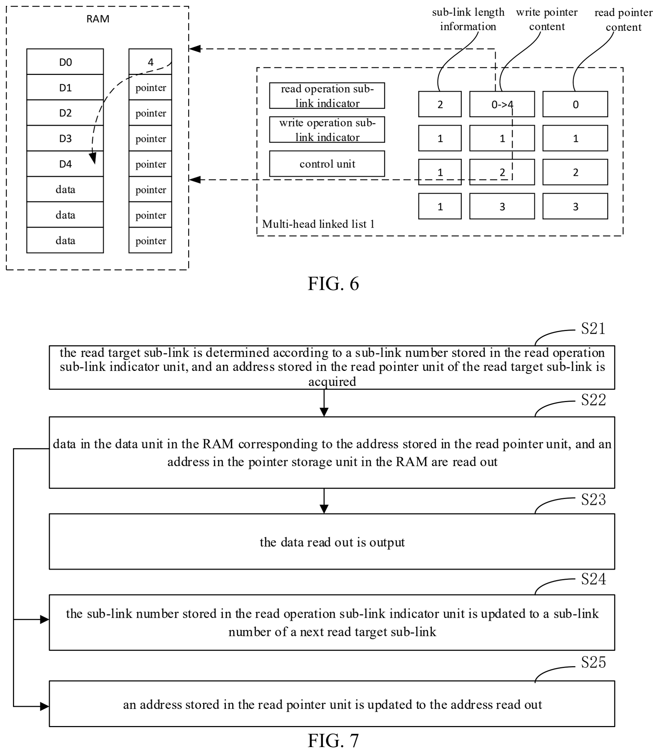

Specifically, please refer to FIG. 6, which shows a data writing process of a multi-head linked list. In FIG. 6, data D0, D1, D2, and D3 are stored in four data units (RAM) of four sub-links, respectively in sequence. At this moment, the data D0, D1, D2, and D3, when stored in the four sub-links respectively, are all the first piece of data stored in the corresponding sub-links. In this case, after the data D0/D1/D2/D3 are stored in the data units of the sub-links respectively in sequence, contents of the pointer storage units corresponding to the data units are not updated. At this moment, the contents of the pointer storage units should be empty, because it is not clear at which address the next piece of data written to the sub-link is stored at this moment, which cannot be pointed to.

When the first sub-link receives a request to write data D4 again, the sub-link length information is represented as 1, and the obtained free address is 4, then the data D4 is stored into the data unit in the RAM corresponding to the free address 4 just acquired, and at the same time, the value 4 of the free address is stored in a pointer storage unit corresponding to the address (address 0) stored in the write pointer unit of the sub-link, that is, the data unit corresponding to the address 0 stores the data D0, the pointer storage unit stores the address 4, and then the content stored in the write pointer unit of the sub-link is updated from the address 0 to the address 4, and the write pointer unit of the sub-link points to the address 4, which indicates that the current data is written to the data unit corresponding to the address 4.

Optionally, in the data processing method of the embodiment, if the write target sub-link into which the to-be-written data is to be written is the i-th sub-link among the n sub-links, the next corresponding write target sub-link is the (*i*+1)-th sub-link. If the write target sub-link into which the to-be-written data is to be written is the n-th sub-link among the n sub-links, the next corresponding write target sub-link is the 1st sub-link.

Specifically, with reference to FIG. 4, the data writing of n sub-links is performed by selecting the corresponding sub-link for writing data in each clock cycle in an order of the sub-link numbers, and the n sub-links are cycled. In FIG. 4, one data writing and storage operation for each sub-link may be performed every n cycles.

Optionally, the data processing method in the embodiment further includes: a data reading operation is performed when the control unit receives a data reading request.

The step of performing the data reading operation, as shown in FIG. 7, includes the following steps.

Step S21: The read target sub-link is determined according to a sub-link number stored in the read operation sub-link indicator unit, and an address stored in the read pointer unit of the read target sub-link is acquired.

Step S22: Data in the data unit in the RAM corresponding to the address stored in the read pointer unit, and an address in the pointer storage unit in the RAM are read out.

Specifically, when data reading is performed, the data in the data unit and the address in the pointer storage unit corresponding thereto are read out simultaneously. The application of the address in the pointer storage unit is described in the subsequent steps.

Step S23: The data read out is output.

Specifically, the data is output to a requesting party that initiates the data reading request.

Step S24: The sub-link number stored in the read operation sub-link indicator unit is updated to a sub-link number of a next read target sub-link.

Step S25: An address stored in the read pointer unit is updated to the address read out.

Optionally, in the data processing method of the embodiment, the step of performing the data reading operation further includes:
Step S26: When a piece of data in a data unit corresponding to one address and the address in a pointer storage unit in the RAM are read out, the address read out is written into the free address management unit.

Specifically, after the data corresponding to one address and the pointer address in the RAM are read out, the one address is released and written back to the free address management unit for subsequent continued use.

Optionally, in the data processing method of the embodiment, if the read target sub-link where the to-be-read data is located is the i-th sub-link among the n sub-links, the next corresponding read target sub-link is the (i+1)-th sub-link, with 1≤*i*≤n-1. If the read target sub-link where the to-be-read data is located is the n-th sub-link among the n sub-links, the next corresponding read target sub-link is the 1st sub-link.

Specifically, with reference to FIG. 4, corresponding to the storage of the data, the data reading for n sub-links is also performed in each clock cycle in an order of the sub-link numbers, and the n sub-links are cycled. In FIG. 4, one data reading operation for each sub-link may be performed every n cycles.

It should be noted that the method of the embodiment is implemented based on the linked list data structure of the above embodiment. Accordingly, contents not described in detail in the method of the embodiment can be obtained by referring to the linked list data structure of the above embodiment, which will not be repeated here.

In another embodiment of the present invention, a computer-readable storage medium is provided, which stores a computer program. The computer program, when executed by a processor, may cause the processor to implement the data processing method for the linked list data structure as described in the above embodiments.

Specifically, the computer-readable storage medium may include: any entity or recording medium capable of carrying computer program instructions, a USB flash drive, a mobile hard disk, a magnetic disk, an optical disk, a computer memory, a Read-Only Memory (ROM), a Random Access Memory (RAM), an electrical carrier signal, a telecommunication signal, and a software distribution medium, etc.

In another embodiment of the present invention, an electronic device is provided, including a processor, a memory, and a computer program stored in the memory and executable by the processor. The processor, when executing the computer program, may implement the data processing method for the linked list data structure as described in the above embodiments.

The electronic device may further include a bus connecting different components (including the memory and the processor). The memory may include a non-transitory computer-readable storage medium, such as the RAM and/or a cache memory. The memory may further include at least one program product having a group (eg, at least one) of program modules which are configured to perform the functions of various embodiments of the present invention. The electronic device may communicate with one or more external devices (e.g., a keyboard, a pointing device, a display, etc.), or with one or more devices that enable a user to interact with the electronic device, and/or with any device that enables the electronic device to communicate with one or more other computing devices (e.g., a network card). Such communication may be performed through an input/output (I/O) interface, and the electronic device may further communicate with one or more networks (e.g., a local area network (LAN), a wide area network (WAN), and/or a public network, such as the Internet) through a network adapter.

In another embodiment of the present invention, a chip is provided, which includes a processor and a memory.

The processor is configured to invoke and execute a computer program from the memory, so that a device equipped with the chip may implement the above data processing method.

In another embodiment of the present invention, a computer program product is provided, which includes related program instructions. The related program instructions, when executed by a processor, may cause the processor to implement the above-mentioned data processing method.

In another embodiment of the present invention, a computer program is provided, which includes program instructions. When executed on an electronic device, the program instructions may cause the computer device to perform the above-mentioned data processing method.

In another embodiment of the present invention, a device is provided, which may include at least one processor. When involved program instructions are executed by the at least one processor, the device may implement the above-mentioned data processing method.

The embodiments of the present invention are described above. The above description is exemplary, not exhaustive, and is not limited to the disclosed embodiments. Many modifications and variations are obvious to those skilled in the art without departing from the scope and spirit of the described embodiments of the present invention. The terms used in the present invention are selected to optimally explain the principles of the embodiments, practical applications, or technical improvements in the marketplace, or to enable other skilled in the art to understand the embodiments disclosed herein.

## Claims

1. A linked list data structure, comprising: a Random Access Memory (RAM), a free address management unit, and a multi-head linked list; wherein
the multi-head linked list comprises a control unit, a write operation sub-link indicator unit, a read operation sub-link indicator unit, and *n* sub-links, where *n* is a positive integer greater than or equal to 2; the n sub-links each comprise a sub-link length unit, a write pointer unit, and a read pointer unit; the RAM comprises a plurality of data units, and a plurality of pointer storage units corresponding to the plurality of data units in a one-to-one correspondence, wherein one data unit and one corresponding pointer storage unit share one address in the RAM;
the plurality of data units are configured to store data;
the plurality of pointer storage units are configured to store addresses, wherein one data unit is configured to store the i-th piece of data of one sub-link, one pointer storage unit corresponding to the one data unit is configured to store an address of a data unit where the (*i*+1)-th piece of data of the one sub-link is located;
the free address management unit is configured to manage free addresses in the RAM, and output one free address to the control unit when receiving a free address reading request from the control unit;
the write operation sub-link indicator unit is configured to store a sub-link number of a write target sub-link, wherein the write target sub-link is a sub-link into which to-be-written data is to be written;
the read operation sub-link indicator unit is configured to store a sub-link number of a read target sub-link, wherein the read target sub-link is a sub-link where the to-be-read data is located;
the sub-link length unit is configured to store sub-link length information, wherein the sub-link length information indicates the number of pieces of data currently stored in a sub-link;
the write pointer unit is configured to store an address of a piece of data in the RAM which is currently written into the multi-head linked list;
the read pointer unit is configured to store an address of a next piece of data in the RAM which is to be read from the multi-head linked list; and
the control unit is configured to: determine the write target sub-link according to the sub-link number stored in the write operation sub-link indicator unit when receiving a data writing request; perform a data writing operation according to the free address, sub-link length information stored in a sub-link length unit of the write target sub-link, and an address stored in the write pointer unit; determine a read target sub-link according to the sub-link number stored in the read operation sub-link indicator unit when receiving a data reading request; and perform a data reading operation according to an address stored in a read pointer unit of the read target sub-link.

2. The linked list data structure according to claim 1, wherein the free address management unit is a First Input First Output (FIFO) device, wherein when an address in the RAM is free, the free address is written into the FIFO device.

3. The linked list data structure according to claim 1, wherein the write operation sub-link indicator unit, the read operation sub-link indicator unit, and the sub-link length unit are all registers.

4. A data processing method, applied to the linked list data structure of any one of claims 1 to 3, the method comprising: performing a data writing operation when the control unit receives a data writing request; wherein
performing the data writing operation comprises:
acquiring to-be-written data according to the data writing request;
reading a sub-link number stored in the write operation sub-link indicator unit, determining a write target sub-link according to the sub-link number stored in the write operation sub-link indicator unit, and acquiring sub-link length information stored in a sub-link length unit of the write target sub-link, and an address stored in a write pointer unit of the write target sub-link;
transmitting a free address reading request to the free address management unit, and receiving a free address returned by the free address management unit;
writing the to-be-written data into a data unit in the RAM corresponding to the free address;
determining whether to write the free address into a pointer storage unit in the RAM corresponding to the address stored in the write pointer unit of the write target sub-link according to the sub-link length information stored in the sub-link length unit of the write target sub-link;
updating the sub-link number stored in the write operation sub-link indicator unit to a sub-link number of a next write target sub-link;
updating the address stored in the write pointer unit of the write target sub-link to the free address;
updating the sub-link length information stored in the sub-link length unit of the write target sub-link according to the number of pieces of data currently stored in the write target sub-link.

5. The data processing method according to claim 4, wherein determining whether to write the free address into the pointer storage unit in the RAM corresponding to the address stored in the write pointer unit of the write target sub-link according to the sub-link length information stored in the sub-link length unit of the write target sub-link comprises:
determining whether the to-be-written data is the first piece of data written to the write target sub-link according to the sub-link length information stored in the sub-link length unit of the write target sub-link; determining that the pointer storage unit in the RAM corresponding to the address stored in the write pointer unit of the write target sub-link is empty when the to-be-written data is the first piece of data written to the write target sub-link; or writing the free address into the pointer storage unit in the RAM corresponding to the address stored in the write pointer unit of the write target sub-link when the to-be-written data is not the first piece of data written to the write target sub-link.

6. The data processing method according to claim 4, wherein
when the write target sub-link into which the to-be-written data is to be written is the i-th sub-link among the n sub-links, the next corresponding write target sub-link is the (*i*+1)-th sub-link;
when the write target sub-link into which the to-be-written data is to be written is the n-th sub-link among the n sub-links, the next corresponding write target sub-link is the 1st sub-link.

7. A data processing method, applied to the linked list data structure of any one of claims 1 to 3, the method comprising: performing a data reading operation when the control unit receives a data reading request; wherein
performing the data reading operation comprises:
determining a read target sub-link according to a sub-link number stored in the read operation sub-link indicator unit, and acquiring an address stored in the read pointer unit of the read target sub-link;
reading out data in the data unit in the RAM corresponding to the address stored in the read pointer unit, and an address in the pointer storage unit;
outputting the data read out;
updating the sub-link number stored in the read operation sub-link indicator unit to a sub-link number of a next read target sub-link;
updating an address stored in the read pointer unit to the address read out.

8. The data processing method according to claim 7, wherein performing the data reading operation further comprises:
when a piece of data in a data unit corresponding to one address and the address in the pointer storage unit in the RAM are read out, writing the address read out into the free address management unit.

9. The data processing method according to claim 7, wherein
when the read target sub-link where the to-be-read data is located is the i-th sub-link among the n sub-links, the next corresponding read target sub-link is the (*i*+1)-th sub-link, with 1 *≤i≤*n-1;
when the read target sub-link where the to-be-read data is located is the n-th sub-link among the n sub-links, the next corresponding read target sub-link is the 1st sub-link.

10. A computer-readable storage medium, on which a computer program is stored, wherein the computer program, when executed by a processor, causes the processor to implement the data processing method of any one of claims 4 to 9.

11. An electronic device, comprising a processor and a memory storing a computer program executable by the processor, wherein the processor, when executing the computer program, implements the data processing method of any one of claims 4 to 9.

12. A chip, comprising a processor and a memory, wherein
the processor is configured to invoke and execute a computer program from the memory, to cause a device equipped with the chip to implement the data processing method of any one of claims 4 to 9.

13. A computer program product, comprising involved program instructions, wherein the involved program instructions, when executed by a processor, cause the processor to implement the data processing method of any one of claims 4 to 9.

14. A computer program, comprising program instructions, wherein the program instructions, when executed on an electronic device, cause the computer device to implement the data processing method of any one of claims 4 to 9.

15. A device, comprising at least one processor, wherein involved program instructions, when executed by the at least one processor, cause the device to implement the data processing method of any one of claims 4 to 9.
